# EUROPÄISCHE PATENTANMELDUNG

(11) **EP 2 741 162 A1**
(43) Veröffentlichungstag der Anmeldung: **11.06.2014**
(21) Anmeldenummer: 13005594.0
(22) Anmeldetag: 02.12.2013
(51) Int. Cl.: G05D 16/10

(54) **Geeichter Gasdruckminderer mit Manometer**

(30) Priorität: 04.12.2012 IT BZ20120041
(71) Anmelder: Lageder Metallverarbeitung GmbH, 39053 Karneid (BZ) (IT)
(72) Erfinder: Oberparleiter, Konrad, I-39030 San Lorenzo di Sebato (BZ) (IT)
(74) Vertreter: Oberosler, Ludwig

(57) **Zusammenfassung**

Geeichter Druckminderer mit Manometer (15) mit Anschlussstutzen (1) am Gaseingang (A) und mit Anschlussstutzen (4) oder gasspezifischer Anschlusseinheit am Gasaustritt (B), versehen mit einem Ablassventil (4c, 16), mit Filter am Gaseingang (A) und am Gasaustritt (B) und einem Kolben (10) welcher auf einen beweglichen, von einer tarierten Feder (11) beaufschlagten, Verschlusskörper (9) wirkt und welcher vom Druck des, nach dem Verschlusskörper austretenden Gases, beaufschlagt ist, wobei der Eintritt des Gases (A) unter nicht reduziertem Druck, der Sitz für die Eingangs-Filter (2, 5, 6), der Sitz für den Verschlusskörper (16) des Ablassventils, die Verbindungsleitung (14) des Manometers (15), sowie der Sitz für eine der elastische Ringdichtungen (10b) des Kolbens (10) des Druckminderers, an einem einzigen zylindrischen Rohrkörper (4) welcher frei von Dichtungen ist, koaxial im Inneren des Außenkörpers (13) des Druckminderers vorgesehen sind, wobei diese elastische Ringdichtung (10b) in einem wiegenartigen Sitz am zylindrischen Gleitsitz (4k) für den Kolben (10) mit Verschlusskörper (9) vorgesehen ist und wobei vor diesem Verschlusskörper (9) im Rohrelement (4) ein Sicherheitsverschlusskörper (8) mit vorderem Stiel (8c) vorgesehen ist welcher durch eine Druckfeder (7) gegen den Verschlusskörper (9) gedrückt wird.

## Beschreibung

Die Erfindung bezieht sich auf einen geeichten Druckminderer von der Art zur Verabreichung medizinischer Gase während der Behandlung, während der Stellung von Diagnosen und/oder während der Kur der Patienten. Die besagten Druckminderer können mit nur einem Manometer, zwecks Überwachung des Druckes am Eingang des Gases, oder mit zwei Manometer für die Überwachung des Druckes am Eingang und am Ausgang des Gases versehen sein; in bestimmten Fällen können diese Druckminderer zusätzlich mit einem Durchflussmesser versehen sein. Die besagten Druckminderer sind meist von der geeichten Art, sie müssen mit einem geeichten Sicherheitsventil, mit Filter am Gaseingang zwecks Zurückhaltung von Verunreinigungen und mit Dichtungen ausgestattet sein; die verwendeten Werkstoffe und eventuelle Schmiermittel müssen, in Bezug auf Sauerstoff und andere medizinische Gase sowie auf deren Mischungen, innerhalb einer bestimmten Temperaturspanne, verträglich sein. Zwecks Überprüfung des Widerstandes gegen Entzündung, welcher bei Druckminderer für Sauerstoff besonders wichtig ist, sehen die Normen spezifische Tests vor. Von den Normen ist weiters ein Ablasventil zwecks Ablassen des Überdrucks, ab einem vorbestimmten Wert, vorgeschrieben.

Bei Einhaltung der EU-Normen UNI EN ISO 10524-1, welche genau die Anforderungen an die Druckminderer für die Verabreichung medizinischer Gase festlegen, sichern derartige Druckminderer, unter normalen Betriebsbedingungen, einen regulären Betrieb. Trotzdem kommt es vor dass, unter besonderen Betriebsbedingungen, insbesondere beim Betrieb mit Sauerstoff, wegen mangelhafter Instandhaltung, wegen Beschädigung oder wegen unfachgemäßer Betätigung, Funktionsstörungen auftreten und/oder dass sich das Gas im Inneren des Druckminderers entzündet.

Aus der US 4,655,246 ist ein Druckminderer bekannt in welchem der axial gleitende, mit Dichtung ausgestattete Kolben des Druckminderers innerhalb eines Zylinders sich unter Wirkung einer Druckfeder bewegt. Es ist bekannt, dass die Bewegungen derartiger gleitender Dichtungen bei jeder Richtungsänderung der Gleitbewegung des Kolbens immer ruckartig erfolgen weil ein bestimmter bekannter Anfangswiderstand der anliegenden Dichtungen überwunden werden muss, was unerwünschte Druckschwankungen zur Folge hat. Gleitende Dichtungen erfordern weiters den Einsatz von Gleitmitteln und/oder von Beschichtungen an den Gleitflächen welche gegenüber bestimmter Gase nicht reaktionsträge sind, der Körper dieser Druckminderer kommt direkt mit den Gasen in Berührung was bei manchen Gasen zu ungewünschten chemischen Reaktionen führen kann. Derartige Druckminderer verfügen weiters nicht über eine selbsttätige Einrichtung, wie z.B. einem Gleitkörper welcher, z.B. im Falle des Abschmelzens des Verschlusskörpers, den Durchfluss des Gases selbsttätig unterbricht.

Die Erfindung stellt sich die Aufgabe einen geeichten Druckminderer der eingangs beschriebenen Art zu schaffen welcher eine kompakte, platzsparende Bauweise aufweist sowie einen sicheren Betrieb, auch unter besonderen Betriebsbedingungen oder infolge nachlässiger Instandhaltung, sichert.
Weiters stellt sich die Erfindung die Aufgabe der Beibehaltung des verminderten Drucks auf einem möglichst konstantem Wert, auch im Fall von Gasaustritt mit starken Schwankungen des Volumens pro Zeiteinheit.

Zur Lösung dieser Aufgabe schlägt die Erfindung, eine Monoblock-Konstruktion in welche auch das Manometer integriert ist, den Einsatz eines zylindrischen Rohrelementes ohne Dichtungen, aus nicht beschichtetem Werkstoff, welcher korrosionsbeständig und sauerstoffverträglich ist und somit eine geringe Entzündungsgefahr sowie begrenzte Entzündungsfolgen und geringe Energieabgabe im Fall von Entzündung sichert. Dieses Rohrelement weist den Sitz für die Filter am Eingang, den Sitz für den Verschlusskörper des Druckminderers, den Sitz für das Sicherheitsventil, Teil des Sitzes für den

Regelkolben und den Sitz für den Einsatz des Verbindungsrohres des Manometers, aufweist. Im Inneren des selben erfindungsgemäßen Rohrkörpers ist ein Sicherheitsverschlusskörper eingebaut welcher, unter Wirkung einer Feder, die Bewegungen des Verschlusskörpers des Druckreglers stabilisiert und den Zufluss des Gases, im Fall des Schmelzens des Verschlusskörpers des Druckminderers durch innere Entzündung, verhindert.

Das Sicherheitsventil des erfindungsgemäßen Druckminderers ist, am Austritt des Gases in die Atmosphäre, mit einem Filter aus gesintertem Werkstoff versehen welcher auch als Flammensperre und Schalldämpfer wirkt; der selbe Ausgang dieses Sicherheitsventils wird auch für den Auslass des Gases genutzt welches vom Manometer, im Falle von dessen Beschädigung oder Fehlbetrieb, ausströmt.

Der Außenkörper des Druckminderers ist mit einer zentralen durchgehenden Bohrung versehen in welche das vorgenannte, innere zylindrische Rohrelement, samt den Filtern am Gaseingang, dem Sitz für das Sicherheitsventil und dem Sitz für den Einsatz des Verbindungsrohres und des Gehäuses des Manometers, eingebaut ist, wobei der Einsatz dieses Verbindungsrohres als zusätzliche Fixierung für das besagte innere zylindrische Rohrelement wirkt welches, gegen Verdrehung und axiale Verschiebung, in seinem Sitz am Außenkörper des Druckminderers durch bekannte Mittel gesichert ist.

Der Kolben des Druckminderers wirkt unter Druck einer geeichten Feder auf den Verschlusskörper des Druckminderers, erfindungsgemäß ist er mit dem Teil welcher den Verschlusskörper trägt, unter Zwischenlage einer ringförmigen Dichtung, im Inneren eines zylindrischen Sitzes, am Endbereich des zylindrischen Rohrelementes geführt welcher strömungsabwärts nach dem Sicherheitsverschlusskörper vorgesehen ist, während der Teil des Kolbens in Richtung Austritt des Gases mit vermindertem Druck, unter Zwischenlage einer Ringdichtung, im Inneren eines zylindrischen Sitzes welcher am Verschlusselement vorgesehen ist, welches seinerseits am Austritt des Gases mit vermindertem Druck einen Gewindeanschluss aufweist und mittels einem Gewindering am Außenkörper des Druckminderers festgehalten wird. Die besagten zwischengelegten elastischen Ringdichtungen sind in Rillen gelagert welche, sei es am Kolben, als auch an der entsprechenden Oberfläche des zylindrischen Sitzes, vorgesehen sind, wobei die Rillen eine kleinere Tiefe als die Hälfte des Durchmessers der Dichtungen haben, so dass die Differenz zwischen dem Durchmesser des Kolbens und jenem der entsprechenden zylindrischen Fläche beachtlich vermindert wird, so dass, insbesondere die Dichtung welche näher am Verschlusskörper des Druckminderers liegt, im Fall von innerer Entzündung oder Funkenbildung, gegen Beschädigungen abgeschirmt ist. Die besagten Dichtungen mit den wiegenartigen Sitzen welche eine Breite aufweisen die größer als der Durchmesser der Dichtungen ist ermöglichen es, dass der Kolben seine minimalen Regelbewegungen, ohne direktem metallischem Kontakt und auch ohne Gleiten zwischen den Metallflächen und den Dichtungen, ausführt und somit keine Schmiermittel benötigt; dabei werden die Dichtungen einer Abwälzbewegung und/oder einer elastischen Verformung innerhalb der wiegenartigen Sitze unterzogen, wobei bei jeder Richtungsänderung des Kolbens die bekannten Widerstandskräfte der Dichtungen welche am Beginn jeder Gleitbewegung auftreten würden, nicht auftreten. Auf diese Weise erfolgen die Bewegungen des Kolbens ohne Ruckbewegungen auch infolge minimaler Druckveränderungen so dass der reduzierte Druck auf einem wesentlich konstanten Wert, auch im Falle von entströmenden Gasvolumen welche in der Zeiteinhand plötzlich variieren, gehalten wird.

Die Erfindung wird anhand eines, in den beigelegten Zeichnungen schematisch dargestellten, vorzuziehenden Ausführungsbeispieles eines erfindungsgemäßen Druckminderers näher erklärt, dabei erfüllen die Zeichnungen rein erklärenden, nicht begrenzenden Zweck.

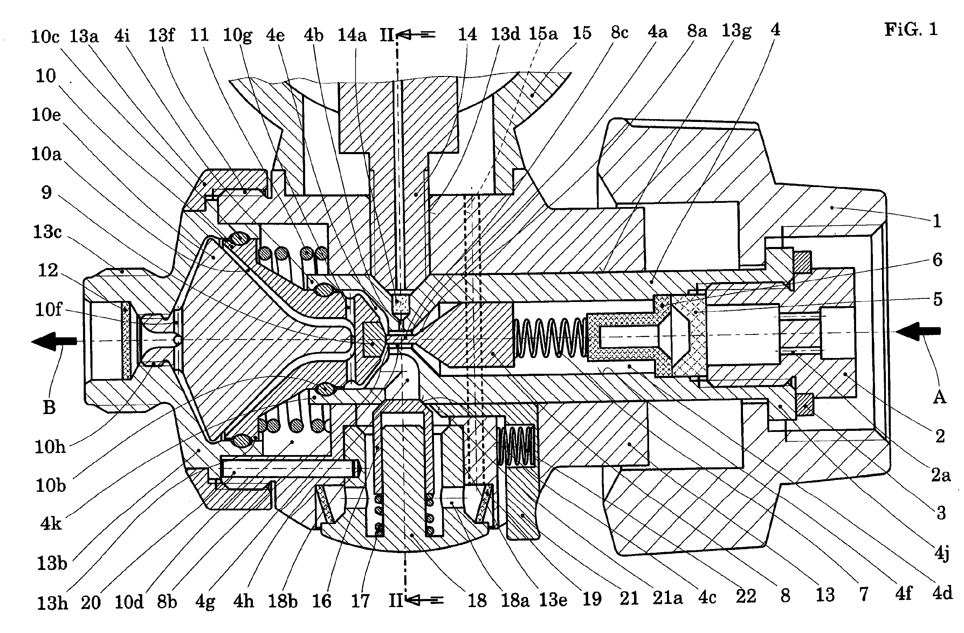

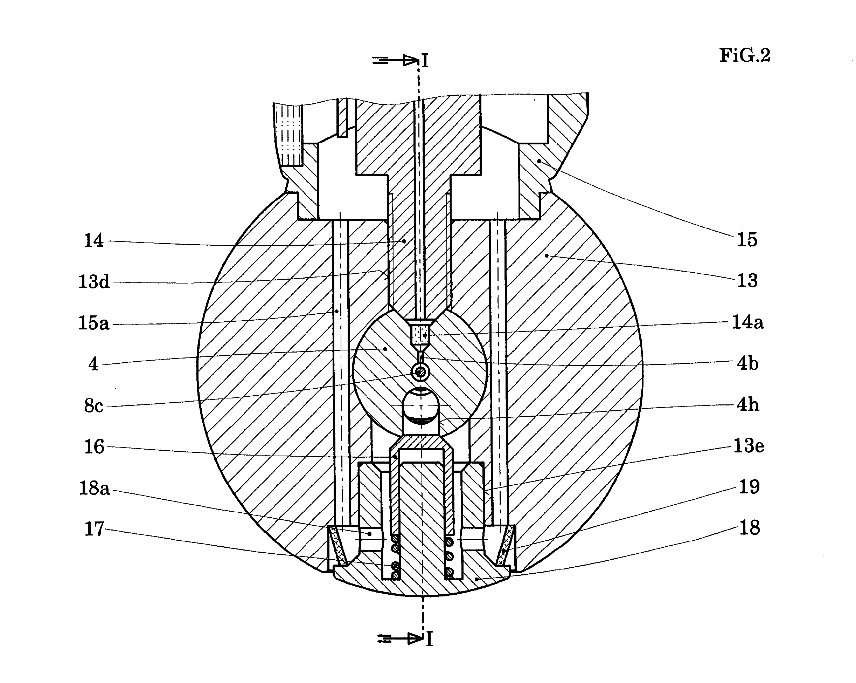

Die Fig. 1 zeigt einen Längsschnitt, gemäß der in Fig. 2 gezeigten Schnittfläche I-I, durch einen erfindungsgemäßen Druckminderer welche die Achse der zueinander koaxialen Anschlüsse für den Eintritt des Gases unter hohem Druck und den Austritt des Gases unter vermindertem Druck, sowie die Achse der Verbindung mit dem nur teilweise dargestellten Manometer beinhaltet.

Die Fig. 2 zeigt einen Querschnitt durch den selben, in Fig. 1 gezeigten Druckminderer, gemäß der in Fig. 1 gezeigten vertikalen Schnittfläche welche die Achse des Verbindungsrohres des Manometers und die Achse des Ablassventiles beinhaltet.

Der geeichte Druckminderer mit Manometer 15, welcher den Druck im Gaseingang A anzeigt, besteht aus einem Außenkörper mit:
- zylindrischem Sitz 13g für den Einsatz eines vom Gas durchströmten zylindrischen Rohrelementes 4,
- Gewindebohrung 13d für den Einsatz des Verbindungsrohres 14 des Manometers 15,
- Gewindeanschluss 13f für die Befestigung mittels Gewindering 13a des Verschlusselementes 13b mit Gewindeanschluss 13c des Gasaustritts B unter vermindertem Druck,
- Sitz 13e für den Einsatz des Körpers 18 des Ablassventiles mit Verschlusskörper 16.

Der dem Gaseintritt A zugewandte Teil des zylindrischen Rohrelementes 4 ist am Ende mit einem vorspringenden Kragen 4j versehen welcher in einem Ansatz 1 mit Innengewinde aufliegt welches auf den Anschlussstutzen der Gasflasche oder der Gasverteilungsanlage aufgeschraubt wird, dabei sichert die Dichtung 3 die Dichtheit der Verbindung. Innerhalb dieses zylindrischen Rohrelementes 4 sind ein axial, entlang der inneren zylindrischen Fläche 4f, sich bewegender Sicherheitsverschlusskörper 8, eine schraubenförmige Druckfeder 7, zwei Filter 5, 6 aus gesintertem Werkstoff welche auch Feuerschutzfunktion haben und ein Filter 2 mit kalibrierten Durchflussbohrungen 2a zwecks Rückhaltung der größeren Schmutzparikel, vorgesehen. Am Ende des zylindrischen Rohrelementes 4 ist eine Dichtung 3 vorgesehen welche am, nicht dargestellten, Auslass des Gases unter hohen Druck anliegt. Die innere Zylinderfläche 4f verjüngt sich konisch um in eine koaxiale, zylindrische Bohrung 4g mit reduziertem Durchmesser zu münden, wobei an deren Einlauf eine ringförmige Kante 4a und an deren Auslauf eine ringförmige Kante 8b ausgebildet ist, nach welcher ein weiterer konischer Raum als Sitz für den Kolben des Verschlusskörpers 9, zusammen mit dem entsprechenden Teil des Kolbens 10 des Druckminderers, vorgesehen ist, dieser Raum geht in einen zylindrischen Raum 4e über um, unter Zwischenlage einer elastischen Ringdichtung 10b, den Teil mit kleinerem Durchmesser des Kolbens 10 des Druckminderers welcher vorne einen zentralen axialen Sitz für den Verschlusskörper 9 aufweist, aufzunehmen. Der anschließende Teil dieses Kolbens 10 ist in einem zylindrischen Raum 10d des Außenkörpers 13 aufgenommen, welcher seinerseits außen mit Gewinde 13f versehen ist an welchem der Gewindering 13a aufgeschraubt ist welcher ein Verschlusselement 13b mit Anschlussstutzen 13c für den Austritt des Gases unter vermindertem Druck hält. Das besagte Verschlusselement 13b ist an der inneren Seite mit einem zylindrischen Sitz 13h für die Aufnahme, unter Zwischenlage einer elastischen Ringdichtung 10c, jenes Teiles des Kolbens 10 versehen, welcher den größeren Durchmesser aufweist. Zwischen dem Teil des Kolbens 10 mit größerem Durchmesser und dem Boden des zylindrischen Raumes 10d ist eine schraubenförmige geeichte Druckfeder 11 eingesetzt. Der axial bewegliche Kolben 10 weist einen inneren Raum auf in welchen ein Körper 10e eingesetzt ist welcher mit dem, dem Auslassstutzen 13c zugewandten, Ende in einen entsprechenden Gewindesitz eingeschraubt ist welcher innen am besagten Anschlussstutzen vorgesehen ist. Das Gas unter vermindertem Druck welches zwischen dem Verschlusskörper 9 und der entsprechenden Dichtkante 8b ausströmt, strömt durch den Zwischenraum 4e, durch die Querbohrungen 10g am Kolben 10, durch den Zwischenraum 10a zwischen Kolben 10 und dem inneren feststehenden Körper 10e, durch die Bohrungen 10f welche an diesem Körper 10e vorgesehen sind und durch den Filter 12.

Der Sicherheitsverschlusskörper 8 mit konischer Fläche 8a drückt, unter Wirkung der Feder 7, mit einem Stiel 8c frontal gegen den Verschlusskörper 9 des Druckminderers welcher, bei Gasdurchfluss, mit seiner Fläche leicht von der Ringkante 8b beabstandet ist. Das zwischen Verschlusskörper 9 und Sitz 8b, sowie durch die Bohrung 10g, durch den Zwischenraum 10a und die Bohrungen 10f am feststehenden Körper 10e, strömende Gas wirkt, in Abhängigkeit der Durchflussmenge, durch den Gasaustritt B mit einem bestimmten Druck auf die größere Fläche des Kolbens 10, wobei die geeichte Feder 11 entsprechend komprimiert wird und der Durchflussquerschnitt zwischen Verschlusskörper 9 und Sitz 8b entsprechend vergrößert, bzw. vermindert wird. Im Fall dass am Gasaustritt B kein Gas entnommen wird, oder im Fall minimaler Gasentnahme, hat der auf den Kolben 10 wirkende Druck einen Wert durch welchen die geeichte Feder 11 komprimiert wird wodurch der Gasdurchfluss vollständig, bzw. beinahe vollständig, unterbrochen wird indem der Verschlusskörper 9 gegen den Sitz 8b gedrückt wird, bzw. indem ein minimaler Durchfluss frei bleibt welcher entsprechend der Druckveränderungen am Gasaustritt B, in Abhängigkeit des entnommenen Gasvolumens in der Zeiteinheit, moduliert wird.

Im Fall eines inneren Defektes, z.B. im Fall der Entzündung des Gases mit, auch nur teilweisem Schmelzen des Verschlusskörpers 9, tritt der Sicherheitsverschlusskörper 8 in Funktion welcher, unter Wirkung der Feder 7, mit dem Stiel 8c durch die Bohrung 4g hindurch auf den Verschlusskörper 9 wirkt. Infolge Verformung des Verschlusskörpers 9 durch Schmelzen, schieben die Feder 7 und vor allem der Gasdurchfluss selbst den Sicherheitsverschlusskörper 8 über die normale, durch den unbeschädigten Verschlusskörper definierte Position, hinaus wodurch die konische Fläche 8a, zwecks Unterbrechung des Gasdurchflusses, gegen die Ringkante 4a gedrückt wird. Das selbe erfolgt bei Schmelzen oder Verformen des Stieles 8c des Sicherheitsverschlusskörpers 8. Wegen der Form des zylindrischen Rohrelements 4 und der innerhalb diesem vorgesehenen Teilen sind, zumindest im Abschnitt durch welchen der Gasdurchfluss unter hohem Druck stattfindet, keine Dichtungen, keine Schmierung oder keine Beschichtung der Oberflächen erforderlich, was die Sicherheit des Druckverminderers erhöht und dessen Instandhaltung minimiert.

Die elastischen Ringdichtungen 10b, 10c welche in wiegenförmigen Sitzen eingesetzt sind ermöglichen dass die minimalen axialen Bewegungen des Kolbens 10 ohne Gleitreibung stattfinden weil die Sitze 4k und 13h einen Durchmesser aufweisen welcher eine direkte umlaufende Berührung mit den entsprechenden Flächen des Kolbens 10 vermeidet, dadurch benötigen diese axialen Bewegungen keine Schmiermittel und dadurch erfolgen die Bewegungen ohne bekannten Anfangswiderstand welche bei jedem Richtungswechsel, hervorgerufen durch die Wirkung der elastischen Ringdichtungen in den üblichen bekannten Sitzen, auftreten würde; die axiale Bewegung erfolgt ausschließlich durch eine Abwälzverformung der elastischen Dichtungen 10b, 10c innerhalb der entsprechenden wiegenförmigen Sitze. Dies bringt mit sich dass der Kolben 10 ohne ruckartigen Bewegungen und regulär auf jede minimale Druckveränderung reagiert, wodurch der verminderte Druck konstant auf dem durch die geeichte Feder 11 bestimmten Wert, auch bei stoßartigen Veränderungen des Volumens des ausströmenden Gases unter vermindertem Druck, gehalten wird.

Erfindungsgemäß ist das am Druckminderer vorgesehene Manometer 15 in diesen integriert, wobei dessen Gehäuse in den Außenkörper 13 des Druckminderers eingesetzt ist und von diesem unterstützt wird indem es so wenig wie möglich aus diesem hervorragt und mit dem Durchfluss des Gases unter nicht vermindertem Druck, direkt über das Verbindungsrohr 14, vorzugsweise im Bereich der axialen Bohrung 4g, verbunden ist indem dieses Rohr, mit seinem konischen Ende, in einen entsprechenden konischen Sitz außen am zylindrischen Rohrelement 4 eingesetzt ist. Der besagte konische Sitz weist eine Verbindungsbohrung 4b mit, zur Längsachse des zylinderförmigen Rohrelementes 4, senkrechter Achse auf. Das Innere des Manometers 5 ist über die Leitung 15a im Inneren des Außenkörpers 13 mit dem Ablassbereich des Ablassventils mit Verschlusskörper 16 verbunden. Die besagte Leitung 15a ermöglicht dass, im Falle von Defekten oder Gasverlust im Innern des Manometers, das Gas in voller Sicherheit über die Konstruktion des Ablassventils entweichen kann.

Erfindungsgemäß besteht das Ablassventil mit Verschlusskörper 16 aus einem zylindrischen Körper 18 welcher in den Sitz 13e am Außenkörper 13 eingesetzt ist, im Inneren dieses zylindrischen Körpers 18 ist eine geeichte Druckfeder 17 vorgesehen welche den Verschlusskörper 16 gegen den Ringsitz 4c drückt welcher außen am zylindrischen Rohrkörper 4 im Bereich der seitlichen Bohrung 4h vorgesehen ist welche im Raum endet welcher den Verschlusskörper 9 des Druckminderers aufnimmt. Der selbe zylindrische Körper 18 haltet ein Ringelement 19 aus gesintertem Werkstoff welches gasdurchlässig ist und flammenhemmende sowie schalldämmende Funktion, in Bezug auf eventuell aus dem Ventil und/oder aus dem über die Leitung 15a aus dem Inneren des Manometers 15 ausströmenden Gases, hat. Im Fall einer Überschreitung des festgelegten geminderten Gasdruckes nach dem Verschlusskörper 9, wirkt das Gas, über die Bohrung 4h, auf den Verschlusskörper 16 indem es die geeichte Feder 17 komprimiert und, zwischen dem Sitz 4c und dem Verschlusskörper 16 sowie durch die Bohrungen 18a am Körper 18 und durch das Ringelement 19 aus gesintertem Werkstoff hindurch, entströmt. Der zylindrische Körper 18 ist gegen Herausziehen oder Beschädigung mittels Sicherheitsstift 20 gesichert welcher in eine durchgehende Bohrung am Körper 13 eingesetzt ist und mit einem Ende in einen entsprechenden Sitz 18b ragt welcher am Körper des Abblassventils vorgesehen ist. Auf diese Weise sind der Körper 18 und die durch diesen zurückgehaltenen Elemente nur, infolge Abschrauben des Gewinderinges 13a, Demontage des Elementes 13b und Herausziehen des Sicherheitsstiftes 20, demontierbar.

Das Ablassventil kann händisch durch Betätigen einer Dekompressionstaste 21 und Kompression der Feder 22 erfolgen so dass die Zunge 21 a mit keilförmigem Ende an der entsprechenden konischen Fläche des Verschlusskörpers 16 des Abblasventils wirkt und die Kompression der Feder 17 und dadurch das Abheben des Verschlusskörpers 16 vom entsprechenden Sitz 4c bewirkt wodurch der Gasdurchfluss freigegeben wird und das Gas über die Bohrungen 18e und dem Filter 19 entweichen kann.

Erfindungsgemäß kann am Druckminderer mit den selben konstruktiven und funktionalen gezeigten und beschriebenen Merkmalen auch ein bekannter Durchflussmesser, beispielsweise am Anschlussstutzen 13c mit Gewinde angebracht werden oder indem das gezeigte Verschlusselement 13b durch ein anderes Verschlusselement ersetzt wird an welchem der Durchflussmesser und ein Ventil zur Einstellung der Durchflussmenge vorgesehen ist.

Erfindungsgemäß kann der Kolben 10 auch voll, ohne feststehendem Innenkörper 10e, gestaltet sein, in diesem Fall wird er mit einer axialen Bohrung als Verbindung mit den Querbohrungen 10g ausgestattet sein und strömungsabwärts wird an diesem vollen Kolben ein feststehender Körper vorgesehen sein welcher eine entsprechende Form und Anordnung aufweist und mit geeigneten Abflussbohrungen versehen ist um das störungsfreie Abströmen des Gases zu begünstigen.

## Patentansprüche

1. Geeichter Druckminderer mit Manometer (15) mit Anschlussstutzen (1) am Gaseingang (A) und mit Anschlussstutzen (4) oder gasspezifischer Anschlusseinheit am Gasaustritt (B), versehen mit einem Ablassventil (4c, 16), mit Filter am Gaseingang (A) und am Gasaustritt (B) und einem Kolben (10) welcher auf einen beweglichen, von einer tarierten Feder (11) beaufschlagten, Verschlusskörper (9) wirkt und welcher vom Druck des, nach dem Verschlusskörper austretenden Gases, beaufschlagt ist, **dadurch gekennzeichnet, dass** der Eintritt des Gases (A) unter nicht reduziertem Druck, der Sitz für die Eingangs-Filter (2, 5, 6), der Sitz für den Verschlusskörper (16) des Ablassventils, die Verbindungsleitung (14) des Manometers (15), sowie der Sitz für eine der elastische Ringdichtungen (10b) des Kolbens (10) des Druckminderers, an einem einzigen zylindrischen Rohrkörper (4) welcher frei von Dichtungen ist, koaxial im Inneren des Außenkörpers (13) des Druckminderers vorgesehen sind, dass diese elastische Ringdichtung (10b) in einem wiegenartigen Sitz am zylindrischen Gleitsitz (4k) für den Kolben (10) mit Verschlusskörper (9) vorgesehen ist und dass vor diesem Verschlusskörper (9) im Rohrelement (4) ein Sicherheitsverschlusskörper (8) mit vorderem Stiel (8c) vorgesehen ist welcher durch eine Druckfeder (7) gegen den Verschlusskörper (9) gedrückt wird.

2. Druckminderer gemäß Anspruch 1, **dadurch gekennzeichnet, dass** der Sicherheitsverschlusskörper (8) in jenem Teil des zylindrischen Rohrkörpers (4) welcher die Eingangs-Filter (2, 5, 6) enthält, vor dem Sitz (8b) für den Verschlusskörper (9) des Druckminderers, eingesetzt ist, dass dieser Sicherheitsverschlusskörper stirnseitig eine konische Fläche (8a) und einen Stiel (8c) aufweist und durch eine Feder (7) gegen den Verschlusskörper (9) des Druckminderers gedrückt wird, dass dieser Stiel (8c) welcher sich durch eine Bohrung (4g) für den Durchfluss des Gases hindurch erstreckt und welche kleineren Durchmesser in Bezug auf den Durchmesser des zylindrischen Raumes (4d), in dem der gleitende Körper (8) aufgenommen ist, aufweist, wobei ein ringförmiger Kantensitz (4a) für die Abdichtung gegenüber der konischen Fläche (8a) des Sicherheitsverschlusskörpers (8) gebildet wird.

3. Druckminderer gemäß Anspruch 1, **dadurch gekennzeichnet, dass** der Kolben (10), an der Seite welche den Verschlusskörper (9) des Druckminderers trägt, unter Zwischenlage einer elastischen Ringdichtung (10b), im Inneren eines zylindrischen Sitzes (4k) am entsprechenden Ende (4i) des zylindrischen Rohrelementes (4) geführt ist, während der dem Gasaustritt (A) zugekehrte Teil des Kolbens, mit Zwischenlage einer elastischen Ringdichtung (10c) im Inneren eines zylindrischen Sitzes (13h) am Verschlusselement (13b) geführt ist, dass die besagten zylindrischen Sitze (4k, 13h) derartigen Durchmesser aufweisen, dass ein Spiel für das freie Gleiten des Kolbens ohne den Einsatz von Schmiermittel gesichert ist und dass die besagten elastischen Ringdichtungen (10b, 10c) in wiegenförmigen Sitzen eingesetzt sind welche am Kolben (10) und auch an den entsprechenden zylindrischen Sitzen (4k, 13h) vorgesehen sind, wobei die besagten wiegenförmigen Sitze eine Tiefe aufweisen welche kleiner ist als die Hälfte des Durchmesser der Dichtungen (10b, 10e) und eine Breite aufweisen welche größer als der Durchmesser der besagten Dichtungen ist.

4. Druckminderer gemäß Anspruch 1, **dadurch gekennzeichnet, dass** der Verschlusskörper (16) des Ablassventils welcher gegen den Sitz (4c) am zylindrischen Rohrelement (4) wirkt, zusammen mit einer Feder (17), in einem zylindrischen Körper (18) eingesetzt ist welcher in einem zylindrischen Sitz (13e) am Außenkörper (13) des Druckminderers eingesetzt ist und mittels Sicherheitsstift (20) gesichert ist welcher in einen Sitz am Außenkörper (13) eingesetzt ist und mit einem Ende in einen Sitz (18b) am zylindrischen Körper (18) eingreift und dass der selbe zylindrische Körper (18) ein ringförmiges Element (19) aus gesintertem Werkstoff haltet welches in einem entsprechenden Sitz am Außenkörper (13) des Druckminderers, im Bereich des Austritts des abgelassenen Gases, vorgesehen ist.

5. Druckminderer gemäß Anspruch 1, **dadurch gekennzeichnet, dass** das Manometer (15) mit dem Bereich zwischen dem Sitz (8b) für den Verschlusskörper (9) und dem Kantensitz (4a) für die Abdichtung an der konischen Fläche (8a) des federbelasteten Sicherheitsverschlusskörpers (8) über ein Verbindungsrohr (14) in Verbindung steht welches in einen Gewindesitz (13d) eingeschraubt ist welcher am Außenkörper (13) des Druckminderers eingeschraubt ist.

6. Druckminderergemäß Anspruch 1, **dadurch gekennzeichnet, dass** im Außenkörper (13) des Druckminderers eine Leitung (15a) für den Durchfluss jenes Gases vorgesehen ist, welches eventuell im Inneren des Gehäuses des Manometers (15) austritt und in Richtung des Aufnahmeraumes für den Körper (18) des Ablassvntils mit Verschlusskörper (16) geleitet wird, welcher vom Ringelement (19) aus gesintertem Werkstoff verschlossen ist.

7. Druckminderer gemäß Anspruch 1, **dadurch gekennzeichnet, dass** der Außenkörper (13) des Druckminderers eine zylindrische durchgehende Bohrung (13g) für den Einsatz des zylindrischen Rohrelements (4), einen Sitz (13e) für den Einsatz des Körpers (18) des Ablassventils mit Verschlusskörper (16), wobei dieser Sitz quer zur Achse der zylindrischen Bohrung (13g) verläuft, eine Gewindebohrung (13d) zum Aufschrauben des Verbindungsrohres (14) des Manometers (15) welches quer zur Achse der zylindrischen durchgehenden Bohrung (13g) verläuft und einen Endteil mit Außengewinde (13f) und Innenraum (10d) für die Aufnahme des Kolbens (10) samt geeichter Feder (11) und für die Anbringung des Verschlusselementes (13b) mittels Gewindering (13a), aufweist.
